# EUROPÄISCHE PATENTSCHRIFT

(11) **EP 1 623 101 B1**
(45) Veröffentlichungstag und Bekanntmachung des Hinweises auf die Patenterteilung: **07.01.2009**
(21) Anmeldenummer: 04739113.1
(22) Anmeldetag: 29.04.2004
(51) Int. Cl.: F02B 29/04, F01P 5/12, F01P 7/16

(54) **KREISLAUF ZUR K HLUNG VON LADELUFT UND VERFAHREN ZUM BETREIB EN EINES DERARTIGEN KREISLAUFS**
CIRCUIT FOR COOLING CHARGE AIR, AND METHOD FOR OPERATING SUCH A CIRCUIT
CIRCUIT POUR REFROIDIR DE L'AIR DE SURALIMENTATION ET PROCEDE D'EXPLOITATION D'UN CIRCUIT DE CE TYPE

(30) Priorität: 30.04.2003 DE 10319762
(43) Veröffentlichungstag der Anmeldung: 08.02.2006
(73) Patentinhaber: Behr GmbH & Co. KG, 70469 Stuttgart (DE)
(72) Erfinder: PANTOW, Eberhard, 71696 Möglingen (DE); ROGG, Stefan, 70193 Stuttgart (DE)
(74) Vertreter: Grauel, Andreas
(86) Internationale Anmeldenummer: PCT/EP2004/004511
(87) Internationale Veröffentlichungsnummer: WO 2004/097194

(56) Entgegenhaltungen:
- EP-A- 1 170 498
- DE-A- 3 320 827
- DE-A- 19 854 544
- GB-A- 1 258 842
- US-A- 3 134 371
- US-A- 3 141 293
- US-A- 5 269 143
- US-A- 5 353 597

## Beschreibung

Die Erfindung betrifft einen Kreislauf zur Kühlung von Ladeluft bei einem Kraftfahrzeug mit einem Turbolader gemäß dem Oberbegriff des Anspruchs 1 sowie ein Verfahren zum Betreiben eines Kreislauf gemäß dem Oberbegriff des Anspruches 12.

Gemäß dem Stand der Technik werden zur Leistungssteigerung von Motoren Turbolader zur Verdichtung der Luft verwendet. Hierbei erfolgt jedoch eine Erwärmung der Luft, im Folgenden als Ladeluft bezeichnet, in Folge der Kompression im Turbolader auf Temperaturen von über 100°C. Um eine derartige Lufterwärmung zu vermindern, werden Luftkühler verwendet, die vorne im Kühlmodul angeordnet sind und zur Kühlung der Ladeluft dienen. Die Ladeluft strömt dabei durch einen Wärmetauscher, der von Umgebungsluft durchströmt und damit gekühlt wird. Dadurch ist eine Abkühlung der Ladeluft auf eine Temperatur möglich, die etwa 15-50 K über der Temperatur der Umgebungsluft liegt.

Ferner ist bekannt, dass die Kühlung der Ladeluft über einen Kühlmittel-kreislauf erfolgt, beispielsweise einem Niedertemperatur-Kreislauf, in dem das Kühlmittel auf sehr niedrige Temperaturen herabgekühlt wird. Mit diesem kalten Kühlmittel wird die Ladeluft in einem Ladeluft/Kühlmittel-Kühler auf eine vorgegebene Kühltemperatur heruntergekühlt. Für die Verschaltung des Niedertemperatur-Kreislaufs gibt es zwei Varianten, nämlich eine Integration des Niedertemperatur-Kreislaufs in einen Nebenkreislauf des Motorkühlsystems oder eine Ausgestaltung in Form eines separaten Kreislaufs.

Die Ausgestaltung als separater Kreislauf hat den Vorteil, dass niedrige Temperaturen erreicht werden können. Nachteilig hieran ist, dass er eine eigene, herkömmlicherweise elektrische Kühlmittel-Pumpe benötigt, die zusätzliche Kosten verursacht. Ferner setzt die Lebensdauer des elektrischen Antriebs der Anwendung in Nutzfahrzeugen Grenzen.

Beim integrierten Kreislauf kann bei entsprechender Verschaltung auf eine zusätzliche Pumpe verzichtet werden. Allerdings ist man durch den Motor-Thermostaten an die Temperatur des Haupt-Kreislaufs gekoppelt, so dass bei regelnden Thermostaten nicht die gleiche Abkühlung erreicht werden kann, wie bei einem separaten Kreislauf. Außerdem ist bei einer Austrittregelung, d.h. der Thermostat ist am Motoraustritt angeordnet, der Niedertemperatur-Kreislauf pumpendruckseitig anzubringen. Dadurch erhöht sich der Druck im Niedertemperatur-Kühler, was zu Problemen bei der Dauerfestigkeit führen kann.

Aus der US 3,134,371 ist ein Kühlsystem für aufgeladene Verbrennungsmotoren bekannt. Das Kühlsystem weist eine Pumpe auf, die durch eine Turbine angetrieben wird.

Aus der GB 1258842 ist eine Vorrichtung zur Aufladung eines Verbrennungsmotors bekannt. Ein Luftkühler bildet einen Teil einer Kühlmaschine, die einen Kompressor, einen Kondensator und ein Expansionsventil umfasst. Der Kompressor wird durch eine Dampfturbine angetrieben, wobei die Turbine mit Dampf aus einem Dampfkessel versorgt wird.

Aus der US 3,141,293 ist ein Verfahren und eine Vorrichtung zum Konditionieren der Ladeluft für Verbrennungsmotoren bekannt. Die aufgeladene Luft durchläuft einen Nachkühler, welcher mittels eines Kältekreislaufs gekühlt wird. Nach dem Durchströmen des Nachkühlers strömt die aufgeladene Luft durch eine Turbine, welche mit einem Kompressor gekoppelt ist, wodurch der Kompressor durch die Turbine angetrieben wird.

Aus der US 5,269,143 ist ein Kühlsystem zum Kühlen von Ansaugluft für einen Verbrennungsmotor bekannt. Ein Kältemittel eines Kältemittelkreislaufs strömt durch einen Kältemittelkompressor, der durch eine von Abgas angetriebene Turbine angetrieben wird.

Aus der DE 198 54 544 A1 ist ein Kühlsystem für eine aufgeladene Brennkraftmaschine bekannt mit einem Hochtemperaturkreislauf, der in einem Hauptzweig die Brennkraftmaschine und ein Hochtemperaturrückkühler sowie in einem Nebenzweig einen Hochtemperaturladeluftkühler umfasst und mit einem Niedertemperaturkreislauf, der einen Niedertemperaturkühler und einen dazu in Reihe geschalteten, von der aus dem Hochtemperaturladeluftkühler austretenden Ladeluft zu deren weiteren Abkühlung durchströmten Niedertemperaturladeluftkühler umfasst.

Es ist Aufgabe der Erfindung, einen Kreislauf der eingangs genannten Art zu verbessern, insbesondere sollen die Vorteile beider Kreisläufe gemäß dem Stand der Technik miteinander verbunden werden.

Diese Aufgabe wird gelöst durch einen Kreislauf mit den Merkmalen des Anspruchs 1.

Erfindungsgemäß wird eine Kühlmittelgetriebene Kühlmittel-Pumpe vorgesehen, welche den Kreislauf zur Kühlung von Ladeluft eines Kraftfahrzeugs mit einem Turbolader umwälzt. Dabei wird in einem zweiten Kreislauf, insbesondere ein Haupt-Kreislauf mit einer entsprechend ausgelegten Pumpe (Hauptkühlmittel-Pumpe), der mit dem Kreislauf, vorliegend einem Niedertemperatur-Kreislauf, der von der Kühlmittelgetriebenen Pumpe angetrieben wird verbunden sein kann, so dass Kühlmittel von einem in den anderen Kreislauf strömen kann, eine Turbine durch das Kühlmittel des zweiten Kreislaufs angetrieben. Hierbei bilden die Pumpe und die Turbine eine Turbinen/Pumpen-Kombination. Der Hauptkühlmittelkreislauf weist einen Haupt-kühler auf. Erfindungsgemäß ist die Pumpe drehfest mit der Turbine verbunden. Die Pumpe und die Turbine der Turbinen/Pumpen-Kombination sind über eine gemeinsame Welle miteinander starr verbunden.

Erfindungsgemäß sind der Kreislauf, in dem die antreibende Turbine, und der Kreislauf, in dem die von der Turbine angetriebene Pumpe angeordnet ist, zumindest zeitweilig miteinander verbindbar.

Der zum Antrieb der Turbinen/Pumpen-Kombination erforderliche Kühlmittel-Teilstrom kann beispielsweise auf der Pumpendruckseite eines Haupt-Kreislaufs abgezweigt und am Motoraustritt wieder zurückgeführt werden. Alternativ kann der Kühlmittel-Teilstrom auch am Motoraustritt abgezweigt und auf der Pumpensaugseite wieder zurückgeführt werden. Andere Abzweig- und Rückführstellen sind möglich, zum Beispiel die Entnahme aus Kühlmittel-Anschlüssen am Motorblock, aus dem Heiz-Kreislauf oder aus Entlüftungsleitungen. Die Rückführung kann an beliebigen Stellen des Kühlmittel-Haupt-Kreislaufs erfolgen, an denen das Druckniveau niedrig genug ist, um ein ausreichend großes Druckgefälle zwischen der Entnahmestelle und der Rückführstelle zur Verfügung zu stellen.

Bevorzugt sind sämtliche Teile Kunststoff-Spritzgussteile, wobei insbesondere das Pumpen-Laufrad und das Turbinen-Laufrad über eine Welle mittelnander verbunden und einstückig ausgebildet sind.

Da auf beiden Seiten der Turbinen/Pumpen-Kombination sich in der Regel das gleiche Kühlmittel befindet, sind die Anforderungen an Dichtheit zwischeneinander nicht so groß und die Aufwendungen für die Abdichtung daher nur gering.

Bevorzugt ist im Kreislauf der Turbine ein Regelventil zur Steuerung der die Turbine durchströmenden Kühlmittelmenge angeordnet. Das Regelventil wird insbesondere durch ein Drosselventil gebildet, das sowohl vor als auch nach der Turbine angeordnet sein kann. Es kann zum Beispiel durch ein elektrisches Stellelement, ein Dehnstoffelement oder eine Druckdose gebildet werden.

Die Ansteuerung des Regelventils kann zum Beispiel in Abhängigkeit vom Ladedruck erfolgen, das heißt dass bei maximalem Ladedruck die maximale wird insbesondere durch ein Drosselventil gebildet, das sowohl vor als auch nach der Turbine angeordnet sein kann. Es kann zum Beispiel durch ein elektrisches Stellelement, ein Dehnstoffelement oder eine Druckdose gebildet werden.

Die Ansteuerung des Regelventils kann zum Beispiel in Abhängigkeit vom Ladedruck erfolgen, das heißt dass bei maximalem Ladedruck die maximale Öffnung und somit der maximale Durchfluss vorgesehen ist. Dies kann beispielsweise direkt durch eine von der Ladeluft-Leitung beaufschlagte Druckdose erfolgen. Somit ist der Durchfluss im Niedertemperatur-Kreislauf über die Motordrehzahl, die proportional zur Hauptwasserpumpe ist, und der Ladedruck direkt von der im Ladeluftkühler abzuführenden Wärmemenge abhängig, was nahe dem thermodynamischen Optimum ist.

Das Regelventil kann auch in Abhängigkeit von der Temperatur angesteuert werden, zum Beispiel der Temperatur des aus dem Ladeluft/Kühlmittel-Kühler austretenden Kühlmittels. Auf diese Weise kann die Ladeluft-Austrittstemperatur weitgehend konstant gehalten werden. Außerdem ist eine wirksame Verhinderung einer lokalen Kühlmittel-Überhitzung gewährleistet. Die temperaturgeführte Steuerung kann beispielsweise über einen Dehnstoffthermostaten erfolgen. Eine weitere Möglichkeit ist die Ansteuerung des Regelventils durch ein Steuergerät, das mehrere Messgrößen verarbeitet.

Die zeitweilige Verbindbarkeit des Kreislaufs, in dem die antreibende Turbine, und der Kreislauf, in dem die von der Turbine angetriebene Pumpe kann bevorzugt durch ein Vierwege-Bypass-Ventil oder ein Mischventil erfolgen. Durch eine entsprechende Ausgestaltung können die Vorteile beider Systeme miteinander verbunden werden. Dadurch kann insbesondere erreicht werden, dass in Betriebszuständen, in denen die Ladeluftabkühlung begrenzt werden muss und/oder zur Entgasung des Niedertemperatur-Kreislaufs derselbe integriert wird. In Betriebszuständen, in denen die maximale Ladeluftabkühlung gefordert wird, wird der Niedertemperatur-Kreislauf abgetrennt und über die hydraulisch angetriebene Pumpe angetrieben.

Bevorzugt weist das Vierwege-Bypass-Ventil einen Bypass auf. Der Bypass verringert den Strömungswiderstand, da der Strömungsweg bei Bedarf verkürzt werden kann.

Vorzugsweise ist das Vierwege-Bypass-Ventil direkt integriert in der Turbinen/Pumpen-Kombination ausgebildet, wodurch sich die Montage vereinfacht.

Zum Druckausgleich sind vorzugsweise die beiden Kreisläufe über ein Rückschlagventil miteinander verbunden.

Im Folgenden wird die Erfindung anhand einiger Ausführungsbeispiele unter Bezugnahme auf die Zeichnung im Einzelnen erläutert. In der Zeichnung zeigen:
- Fig. 1: eine Darstellung einer Turbinen/Pumpen-Kombination,
- Fig. 2a, 2b: verschiedene Anschlussmöglichkeiten der Turbinen/Pumpen-Kombination von Fig. 1,
- Fig. 3a, 3b: verschiedene Schaltungen der Turbinen/Pumpen-Kombination in Verbindung mit einem 4-Wege-Ventil,
- Fig. 4a, 4b: verschiedene Schaltungen der Turbinen/Pumpen-Kombination in Verbindung mit einem alternativen 4-Wege-Ventil,
- Fig. 5: einen Haupt-Kühlmittel-Kreislauf und einen Niedertemperatur-Kühlmittel-Kreislauf gemäß einem ersten Ausführungsbeispiel,
- Fig. 6: einen Haupt-Kühlmittel-Kreislauf und einen Niedertemperatur-Kühlmittel-Kreislauf gemäß einem zweiten Ausführungsbeispiel,
- Fig. 7: einen Haupt-Kühlmittel-Kreislauf und einen Niedertemperatur-Kühlmittel-Kreislauf gemäß einem dritten Ausführungsbeispiel,
- Fig. 8: einen Haupt-Kühlmittel-Kreislauf und einen Niedertemperatur-Kühlmittel-Kreislauf gemäß einem vierten Ausführungsbeispiel,
- Fig. 9: einen Haupt-Kühlmittel-Kreislauf und einen Niedertemperatur-Kühlmittel-Kreislauf gemäß einem fünften Ausführungsbeispiel,
- Fig. 10: einen Haupt-Kühlmittel-Kreislauf und einen Niedertemperatur-Kühlmittel-Kreislauf gemäß einem sechsten Ausführungsbeispiel, und
- Fig. 11: einen Haupt-Kühlmittel-Kreislauf und einen Niedertemperatur-Kühlmittel-Kreislauf gemäß einem siebten Ausführungsbeispiel.

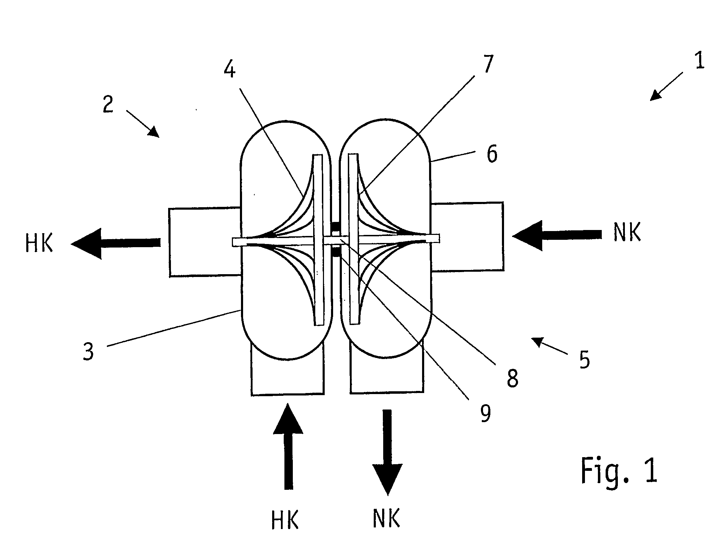

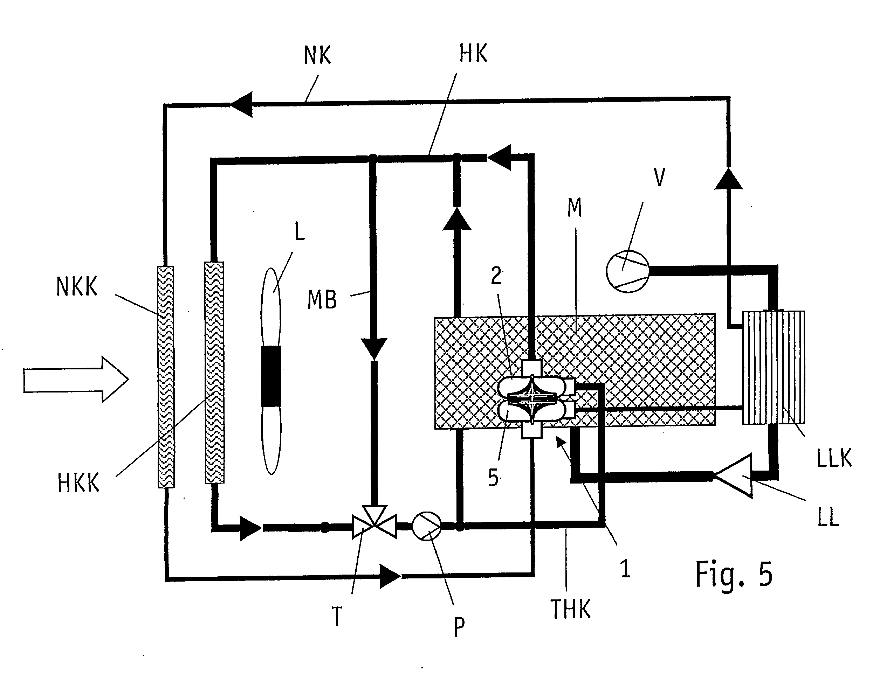

In Fig. 1 ist der prinzipielle Aufbau einer Turbinen/Pumpen-Kombination 1 dargestellt, wie sie in den in Figuren 5 bis 11 dargestellten Kreisläufen verwendet wird. Hierbei wird die Turbinen/Pumpen-Kombination 1 durch eine Turbine 2 mit einem in einem Turbinen-Gehäuse 3 angeordneten Turbinen-Laufrad 4 und eine Pumpe 5 mit einem in einem Pumpen-Gehäuse 6 angeordneten Pumpen-Laufrad 7, welche über eine Welle 8 drehfest miteinander gekoppelt sind, gebildet. Vorliegend bilden das Turbinen-Gehäuse 3 und das Pumpen-Gehäuse 6 eine Einheit, wobei an der Welle 8, die von der Turbinenseite zur Pumpenseite verläuft, eine Wellendichtung 9 vorgesehen ist. Vorliegend sind die Turbine 2 und die Pumpe 5 symmetrisch zueinander ausgebildet, jedoch sind auch andere Ausgestaltungen möglich, insbesondere können Turbine und Pumpe unterschiedlich groß sein und andere Bauformen für die Laufräder aufweisen.

Pfeile in Fig. 1 deuten die Strömungsrichtungen der beiden, die Turbinen/Pumpen-Kombination 1 durchströmenden Kühlmittelströme an. Hierbei strömt auf der Turbinenseite ein Kühlmittel-Teilstrom des Kühlmittelhaupt-Kreislaufs, durch einen Turbinen-Anschlussstutzen in die Turbine 2, dreht das Turbinen-Laufrad 4 und verlässt die Turbine 2 wieder durch einen Turbinen-Auslassstutzen. In Folge der drehfesten Koppelung über die Welle 8 dreht sich mit dem Turbinen-Laufrad 4 auch das Pumpen-Laufrad 7, so dass die Pumpe 5 durch einen Pumpen-Ansaugstutzen Kühlmittel aus dem Niedertemperatur-Kreislauf ansaugt, dieses fördert und wieder durch den Pumpen-Auslassstutzen abgibt, wodurch das Kühlmittel im Niedertemperatur-Kreislauf umgewälzt wird. Die Anordnung der verschiedenen Stutzen muss nicht notwendigerweise der Darstellung von Fig. 1 entsprechen.

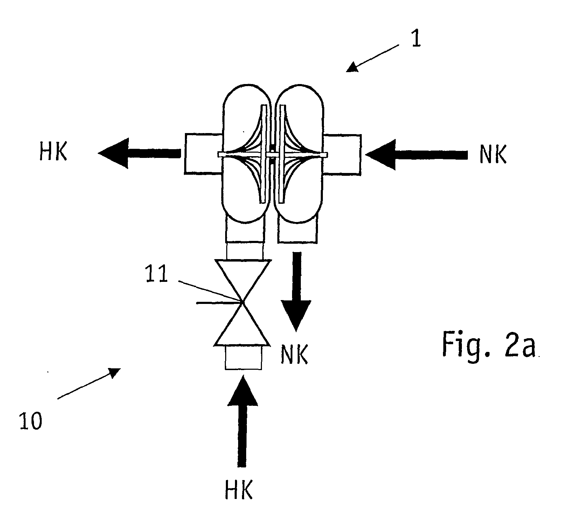

Fig. 2a zeigt die Turbinen/Pumpen-Kombination 1 von Fig. 1, wobei vor dem Turbinen-Anschlussstutzen ein als Regelventil 10 dienendes Drosselventil 11 angeordnet ist, welches die die Turbine 2 durchströmende Kühlmittelmenge des Kühlmittel-Teilstroms vom Kühlmittelhaupt-Kreislauf und somit auch die Drehzahl und die damit zusammenhängende Pumpenleistung der Pumpe 5 regelt. Das Drosselventil 11 kann beispielsweise auch hinter dem Turbinen-Auslassstutzen angeordnet sein oder an einer anderen Stelle des entsprechenden Teils des Kühlmittelhaupt-Kreislaufs.

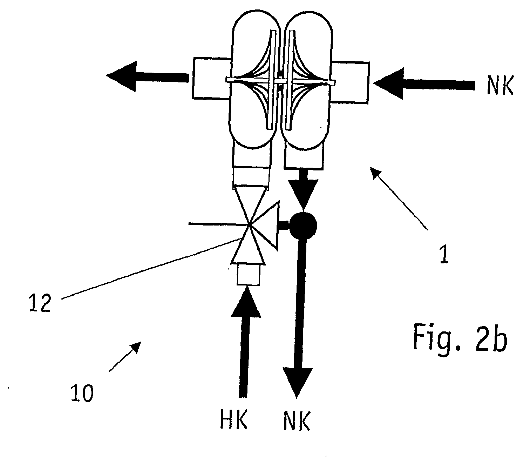

In Fig. 2b ist ein als Regelventil 10 dienendes Mischventil 12 am Turbinen-Anschlussstutzen angeordnet, wobei es einen Bypass zur Verfügung stellt, so dass ein Teil des Kühlmittels aus dem Haupt-Kreislauf mit dem Kühlmittel aus dem Niedertemperatur-Kreislaufs vermischt wird. Dabei wird sukzessive die Durchflussmenge durch die Turbinen/Pumpen-Kombination 1 reduziert. Die Mischung kann verwendet werden, um zum Beispiel im Falle eines Warmlaufens des Motors die Wärmeabgabe durch den Niedertemperatur-Kühler an die Umgebung zu minimieren oder um die Abkühlung des Mediums im primären Wärmeübertrager, also zum Beispiel die Ladeluft im Ladeluft/Kühlmittel-Kühler, auf bestimmte Werte zu regeln.

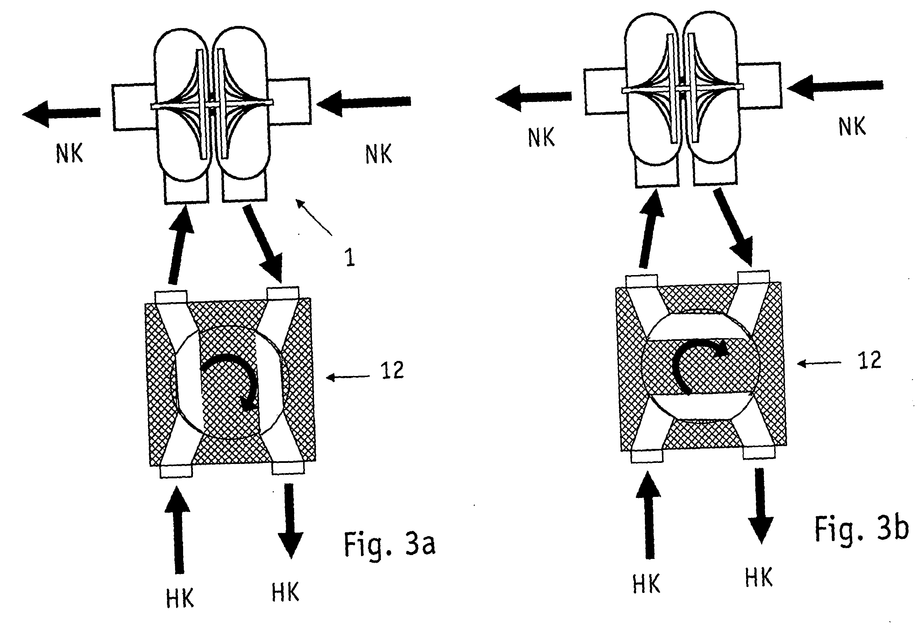

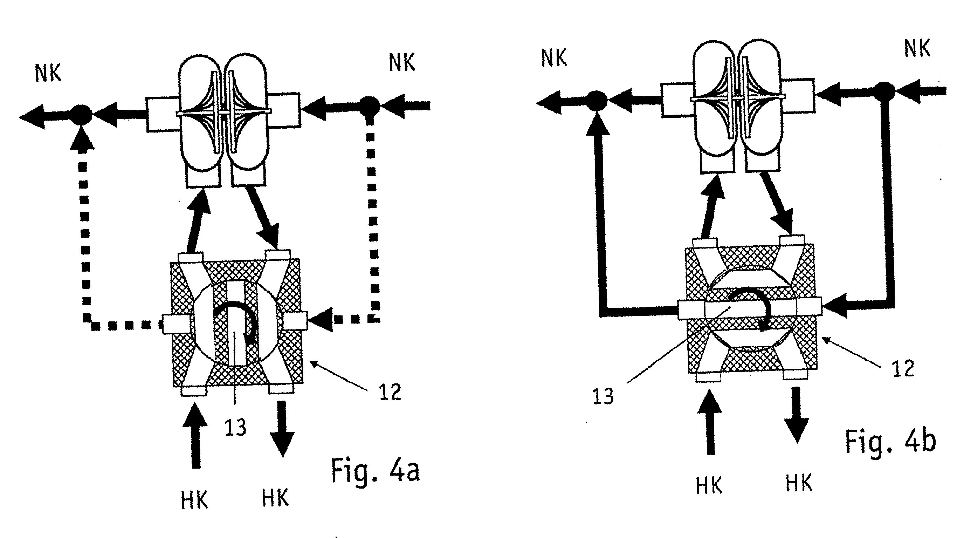

Die Figuren 3a und 3b zeigen schematisch die Anordnung eines 4-Wege-Ventils 12, welches, wie in Fig. 3b dargestellt, eine Verbindung zwischen Haupt-Kreislauf und Niedertemperatur-Kreislauf ermöglicht. In den Figuren 4a und 4b ist eine Variante eines 4-Wege-Ventils 12 mit einem Bypass 13 zur Reduzierung des Druckverlusts im Falle eines integrierten Niedertemperatur-Kreislaufs vorgesehen (vgl. Fig. 4b).

Im Folgenden werden verschiedene Kreisläufe mit einer Turbinen/Pumpenkombination 1, wie zuvor beschrieben, unter Bezugnahme auf die Figuren 5 bis 11 näher erläutert. Hierbei sind gleiche Bauteile der verschiedenen Ausführungsbeispiele mit gleichen Bezugszeichen bezeichnet.

Fig. 5 zeigt einen Haupt-Kreislauf HK, bei dem die Strömungsrichtung des im Haupt-Kreislauf HK strömenden Kühlmittels durch Pfeile angedeutet ist. Der Haupt-Kreislauf HK weist eine Haupt-Kühlmittel-Pumpe auf, im Folgenden als Pumpe P bezeichnet, welche das Kühlmittel im Haupt-Kreislauf HK umwälzt. Kurz nach der Pumpe P zweigt vom Haupt-Kreislauf HK ein Teilzweig THK ab, wobei der Haupt-Kreislauf HK das Kühlmittel durch den Motor M führt, um diesen zu kühlen, und der Teilzweig THK zu einer im Bereich des Motors M angeordneten Turbinen/Pumpen-Kombination 1 führt, wobei das im Teilzweig THK strömende Kühlmittel die Turbinen/Pumpen-Kombination 1 turbinenseitig durchströmt und wie zuvor beschrieben antreibt. Der Teilzweig THK wird dem Haupt-Kreislauf HK anschließend, das heißt nachdem der Haupt-Kreislauf HK den Motor M durchströmt hat, wieder zugeführt.

Der Haupt-Kreislauf HK führt das vom Motor M kommende, heiße Kühlmittel zu einem von Luft (durch einen Pfeil angedeutet) durchströmten Haupt-Kühler HKK. Die Luftströmung wird durch einen Lüfter L unterstützt. Im Haupt-Kreislauf HK ist ferner ein Motorbypass MB vorgesehen, welcher durch einen Thermostaten T geregelt wird, der vor der Pumpe P angeordnet ist (Einlassregelung). Der Motorbypass MB verläuft parallel zum Haupt-Kühler HKK. Es ist auch möglich, den Thermostaten nach dem Motoraustritt oder vor dem Kühlmitteleintritt anzuordnen (Auslassregelung).

Von einem Verdichter V kommend wird Ladeluft LL dem Motor M zugeführt, wobei die Ladeluft LL einen Ladeluft/Kühlmittel-Kühler LLK passiert und hierin abgekühlt wird. Der Ladeluft/Kühlmittel-Kühler LLK ist Teil eines Niedertemperatur-Kreislaufs NK, wobei die Strömungsrichtung des hierin strömenden Kühlmittels durch Pfeile angedeutet ist. Das in diesem Niedertemperatur-Kreislauf NK strömende Kühlmittel wird durch die Pumpe 5 der Turbinen/Pumpen-Kombination 1 umgewälzt, welche, wie zuvor erwähnt durch den Haupt-Kreislauf HK angetrieben wird. Der Niedertemperatur-Kreislauf NK führt zu einem Niedertemperatur-Kühler NKK, der parallel zum Haupt-Kühler HKK angeordnet ist und ebenfalls von der durch den Lüfter L erzeugten Luftströmung gekühlt wird. Der Niedertemperatur-Kühler kann auch anderenorts angeordnet sein, zum Beispiel neben dem Haupt-Kreislauf oder entfernt hiervon.

Die Funktion dieser sehr einfachen Anordnung gemäß dem ersten Ausführungsbeispiel ist Folgende: Das von der Pumpe P umgewälzte Kühlmittel des Haupt-Kreislaufs HK strömt teilweise durch den Motor M, um diesen zu kühlen, und teilweise durch den Teilzweig THK und somit die Turbine 2 der Turbinen/Pumpen-Kombination 1, wodurch die Turbine 2 - und somit auch die mit derselben über die Welle 8 gekoppelte Pumpe 5 der Turbinen/Pumpen-Kombination 1 - vom im Haupt-Kreislauf HK strömenden Kühlmittel angetrieben wird. Der weitere Verlauf des Haupt-Kreislaufs HK weist keine Besonderheiten auf und ist im Wesentlichen aus Fig. 5 ersichtlich, so dass er keiner weiteren Erläuterung bedarf. Im Niedertemperatur-Kreislauf NK wälzt die von der Turbine 2 angetriebene Pumpe 5 das sich hierin befindliche Kühlmittel kontinuierlich um in Abhängigkeit von der Förderleistung der Pumpe P im Haupt-Kreislauf HK, wobei in diesem Fall keine spezielle Steuerung vorgesehen ist.

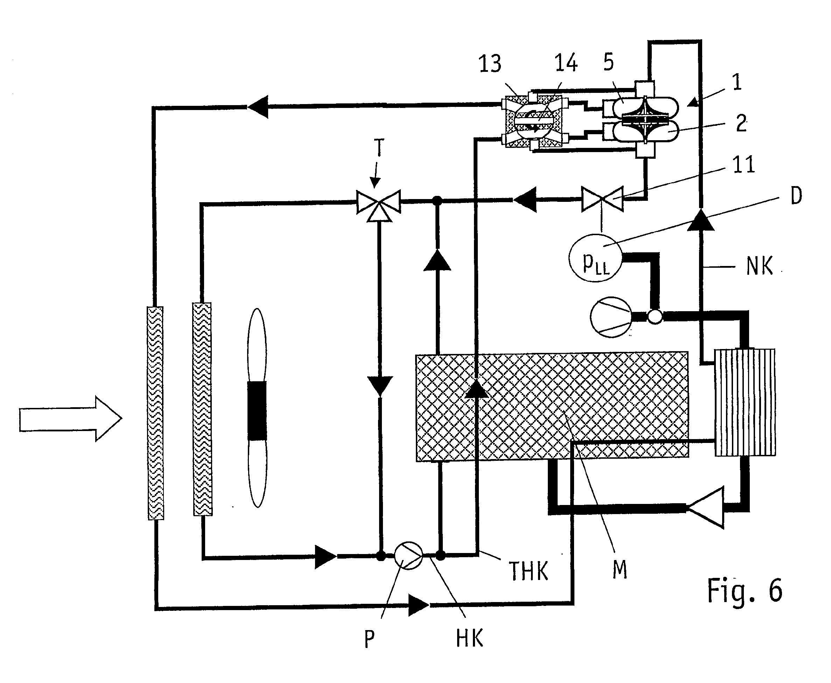

Fig. 6 zeigt ein zweites Ausführungsbeispiel in einem Betrieb des Niedertemperatur-Kreislaufs als separater Kreislauf, bei dem ein 4-Wege-Ventil 13 mit einem Bypass 14 zur Druckverlustreduzierung für den Volllast-Betrieb im Haupt- und Niedertemperatur-Kreislauf HK bzw. NK angeordnet ist, welches bei Bedarf eine Integration des Niedertemperatur-Kreislaufs NK in den Haupt-Kreislauf HK ermöglicht. Hierbei ist im Teilzweig THK dem 4-Wege-Ventil 13 und der Turbine 2 folgend ein regelbares Drosselventil 11 angeordnet, welches von einer Druckdose D gesteuert wird, die in Abhängigkeit vom Ladeluftdruck p_{LL} Kühlmittel durchströmen lässt (vgl. Fig. 6). Der weitere Aufbau des Haupt-Kreislaufs entspricht im Wesentlichen dem des vorherigen Ausführungsbeispiels, jedoch ist der Thermostat T an der anderen Abzweigung des Motorbypasses MB angeordnet (Auslassregelung). Eine Einlassregelung ist ebenso möglich.

Das von der Pumpe 5 umgewälzte Kühlmittel des Niedertemperatur-Kreislaufs NK strömt von der Pumpe 5 durch das 4-Wege-Ventil 13, zum Niedertemperatur-Kühler NKK, zum Ladeluft/Kühlmittel-Kühler LLK und wieder zur Pumpe 5.

Wird das 4-Wege-Ventil 13 um 90° gedreht, so ist der Niedertemperatur-Kreislauf NK in den Haupt-Kreislauf HK integriert. Die Integration erfolgt insbesondere in Betriebszuständen, in denen die Ladeluftabkühlung begrenzt werden muss. Ferner kann sie dazu verwendet werden, das Kühlmittel des Niedertemperatur-Kreislaufs NK auszutauschen und/oder den Niedertemperatur-Kreislauf NK zu entgasen. Wie aus Fig. 6 entnommen werden kann, strömt bei gedrehtem 4-Wege-Ventil 13 Kühlmittel vom Teilzweig THK des Haupt-Kreislauf HK in den Niedertemperatur-Kreislauf NK, wohingegen Kühlmittel vom Niedertemperatur-Kreislauf NK sowohl durch den Bypass 14 des 4-Wege-Ventils 13 als auch durch die Pumpe 5, das 4-Wege-Ventil 13 und die Turbine 2, vorbei am regelbaren Drosselventil 11 in den Haupt-Kreislauf HK strömt.

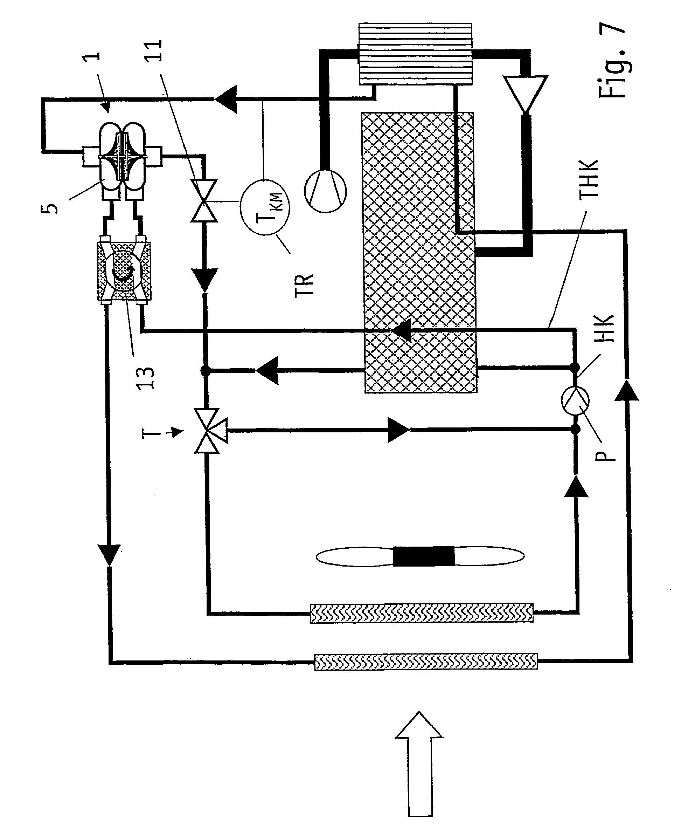

Ein in Fig. 7 dargestelltes drittes Ausführungsbeispiel entspricht im Wesentlichen dem zweiten Ausführungsbeispiel von Fig. 6, außer dass anstelle der Druckdose D, welche das Drosselventil 11 steuert, ein Temperaturregler TR vorgesehen ist, welcher das Drosselventil 11 in Abhängigkeit von der Kühlmitteltemperatur T_{KM} steuert. Ferner ist im 4-Wege-Ventil 13 kein Bypass 14 vorgesehen, so dass das gesamte Kühlmittel durch die Pumpe 5 und die Turbine 2 strömen muss.

Die Ansteuerung des Drosselventils kann auch durch ein Steuergerät erfolgen, das den im jeweiligen Betriebszustand des Motors erforderlichen Kühlmittelstrom im Niedertemperatur-Kreislauf ermittelt und einstellt.

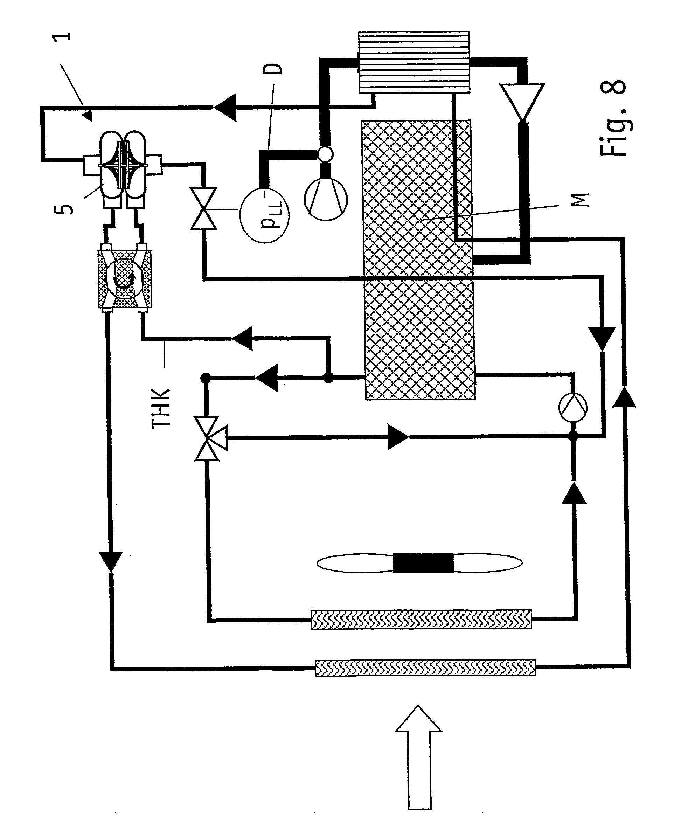

Fig. 8 zeigt ein viertes Ausführungsbeispiel, bei dem die Abzweigung des Teilzweigs THK im Haupt-Kreislauf HK erst nach dem Durchströmen des Motors M angeordnet ist. Die Rückführung erfolgt in diesem Fall kurz vor der Pumpe P, damit ein ausreichendes Druckgefälle vorhanden ist. Ansonsten entspricht der Aufbau im Wesentlichen dem des zweiten Ausführungsbeispiels, wobei - entsprechend dem dritten Ausführungsbeispiel - kein Bypass 14 im 4-Wege-Ventil 13 vorgesehen ist.

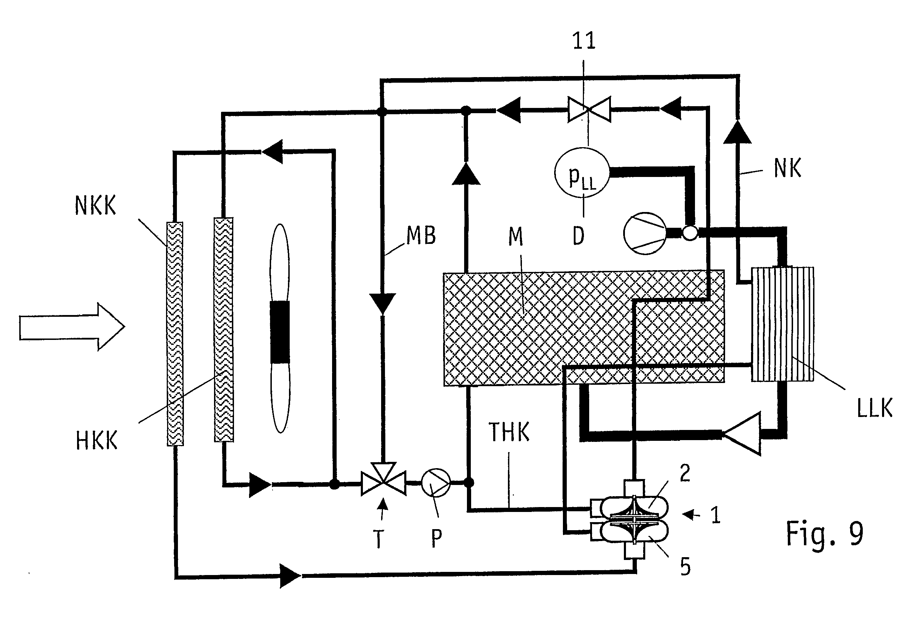

Bei einem in Fig. 9 dargestellten fünften Ausführungsbeispiel wird das Kühlmittel für den Niedertemperatur-Kreislauf NK direkt nach dem Haupt-Kühler HKK abgezweigt, kurz vor dem Thermostaten T und der Pumpe P. Das abgezweigte Kühlmittel, welches bereits den Haupt-Kühler HKK durchlaufen hat, wird durch den Niedertemperatur-Kühler NKK geleitet und anschließend durch die Turbine 2 der Turbinen/Pumpen-Kombination 1, von wo aus das kalte Kühlmittel durch den Ladeluft/Kühlmittel-Kühler LLK zur Kühlung der Ladeluft und durch den Motorbypass MB weiter zum Thermostaten T oder - je nach Steuerung durch denselben - zum Haupt-Kühler HKK geleitet wird.

Vom Haupt-Kreislauf HK gelangt Kühlmittel, das durch den Teilzweig THK strömt, durch die Pumpe 5 des Turbinen/Pumpen-Kombination 1, welche in diesem Fall als zusätzlicher Antrieb dient. Anschließend strömt das Kühlmittel durch das Drosselventil 11, welches in Abhängigkeit vom Ladeluftdruck p_{LL} gesteuert wird, und wird anschließend wieder dem Haupt-Kreislauf HK zugeführt. Wird das Drosselventil 11 geschlossen, so gelangt kein Kühlmittel durch die Turbine 2 und bremst im "Leerlauf" die Pumpe 5, so dass auch weniger Kühlmittel durch den Niedertemperatur-Kreislauf NK geleitet wird.

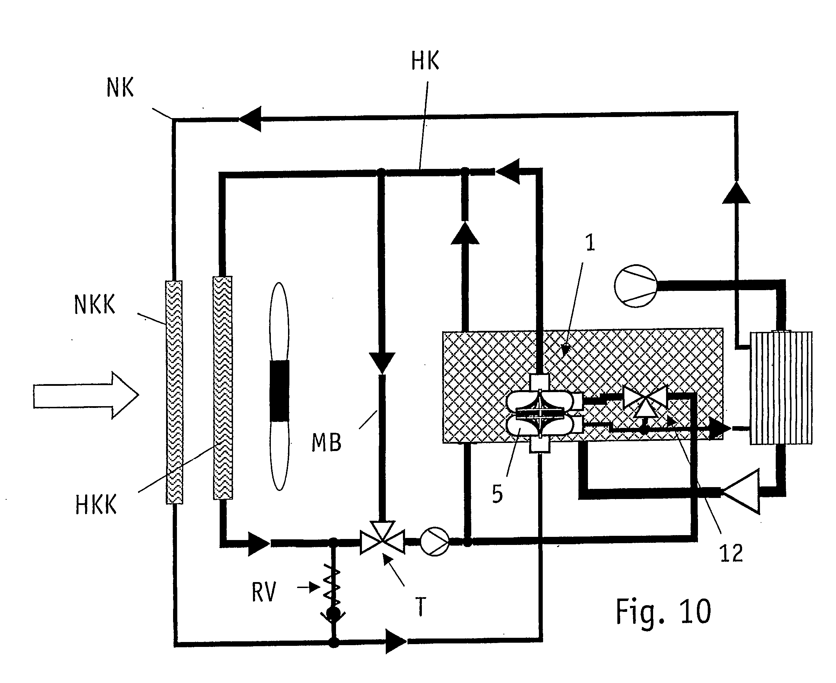

Gemäß einem in Fig. 10 dargestellten sechsten Ausführungsbeispiel, das dem in Fig. 5 dargestellten ersten Ausführungsbeispiel ähnelt, ist ein Mischventil 12, wie in Fig. 2b dargestellt, vorgesehen, das die beiden Kreisläufe HK und NK miteinander verbindet und dazu verwendet wird, die Zuströmtemperatur in den Ladeluft/Kühlmittel-Kühler LLK zu steuern und somit die Ladeluft zu temperieren. Auf diese Weise kann der Niedertemperatur-Kühler NKK bei entsprechenden Betriebsbedingungen umgangen werden. Für einen Druckausgleich zwischen den beiden Kreisläufen HK und NK ist ein Rückschlagventil RV zwischen denselben in einem Teil der Haupt-Kreislaufs HK vorgesehen, in dem der Druck relativ niedrig ist.

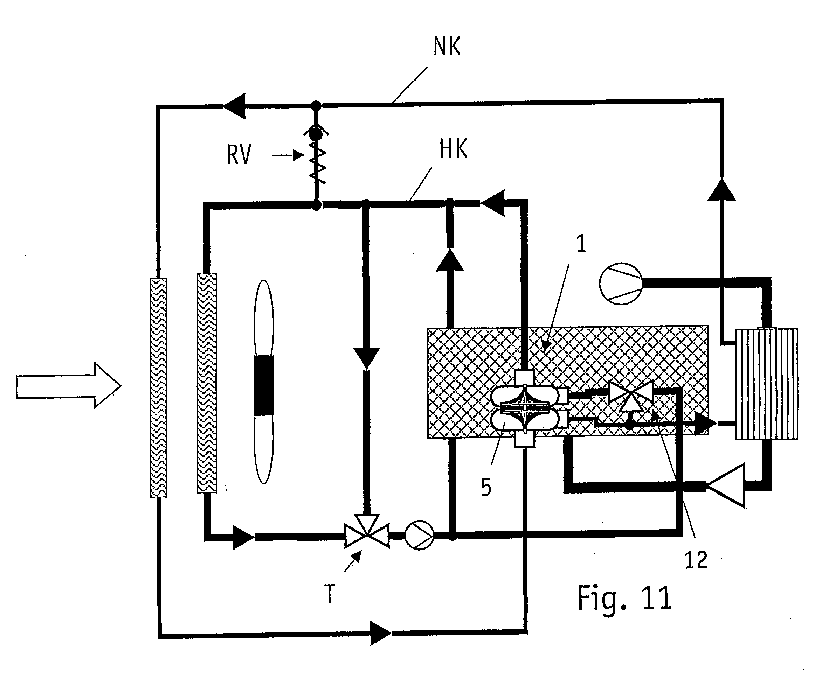

Ein in Fig. 11 dargestelltes siebtes Ausführungsbeispiel entspricht im Wesentlichen dem in Fig. 10 dargestellten sechsten Ausführungsbeispiel, jedoch ist das Rückschlagventil RV, das zwischen dem Haupt-Kreislauf HK und dem Niedertemperatur-Kreislauf NK vorgesehen ist, nicht nach den Kühlern HKK bzw. NKK sondern nach dem Motorbypass MB und vor den Kühlern HKK bzw. NKK angeordnet.

### Bezugszeichenliste

- 1: Turbinen/Pumpen-Kombination
- 2: Turbine
- 3: Turbinen-Gehäuse
- 4: Turbinen-Laufrad
- 5: Pumpe
- 6: Pumpen-Gehäuse
- 7: Pumpen-Laufrad
- 8: Welle
- 9: Wellendichtung
- 10: Regelventil
- 11: Drosselventil
- 12: Mischventil
- 13: 4-Wege-Ventil
- 14: Bypass

- D: Druckdose
- HK: Haupt-Kreislauf HK
- HKK: Haupt-Kühler
- L: Lüfter
- LL: Ladeluft
- LLK: Ladeluft/Kühlmittel-Kühler
- M: Motor
- MB: Motorbypass
- NK: Niedertemperatur-Kreislauf
- NKK: Niedertemperatur-Kühler
- P: Pumpe
- p_{LL}: Ladeluftdruck
- RV: Rückschlagventil
- T: Thermostat
- THK: Teilzweig
- T_{KM}: Kühlmitteltemperatur
- TR: Temperaturregler
- V: Verdichter

## Patentansprüche

1. Kreislauf zur Kühlung von Ladeluft (LL) bei einem Kraftfahrzeug mit einem Turbolader, mit einem Niedertemperatur-Kreislauf mit einem Niedertemperaturkühler (NK), aufweisend eine Turbinen/Pumpen-Kombination (1), bei der eine Pumpe (5) drehfest mit einer Turbine (2) gekoppelt ist, wobei die Turbine (2) durch ein Kühlmittel eines Haupt-Kühlmittel-Kreislaufs (HK) antreibbar ist und die Pumpe (5) den Niedertemperaturkreislauf umwälzt, wobei der Haupt-Kühlmittel-Kreislauf (HK), in dem die antreibende Turbine (2) und der Niedertemperaturkreislauf, in dem die von der Turbine (2) angetriebene Pumpe angeordnet sind, miteinander verbindbar sind, **dadurch gekennzeichnet, dass** der Haupt-Kühlmittel-Kreislauf (HK) einen Haupt-Kühler (HKK) aufweist.

2. Kreislauf nach Anspruch 1, **dadurch gekennzeichnet, dass** die Turbine (2) in den, zumindest zeitweise getrennt ausgebildeten Haupt-Kühlmittel-Kreislauf (HK) integriert ist.

3. Kreislauf nach einem der vorhergehenden Ansprüche, **dadurch gekennzeichnet, dass** die Pumpe (5) und die Turbine (2) eine gemeinsame Welle (8) aufweisen.

4. Kreislauf nach einem der vorhergehenden Ansprüche, **dadurch gekennzeichnet, dass** das Pumpen-Laufrad (7) und/oder das Turbinen-Laufrad (4) und/oder das Pumpen-Gehäuse (6) und/oder das Turbinen-Gehäuse (3) ein Kunststoff-Spritzgussteil ist.

5. Kreislauf nach einem der vorhergehenden Ansprüche, **dadurch gekennzeichnet, dass** im Kreislauf der Turbine (2) ein Regelventil (10) zur Steuerung der die Turbine (2) durchströmenden Kühlmittelmenge angeordnet ist.

6. Kreislauf nach Anspruch 1, **dadurch gekennzeichnet, dass** ein Vierwege-Bypass-Ventil (13) oder ein Mischventil (12) vorgesehen ist, das einen Wechsel zwischen zwei getrennten Kreisläufen und einem gemeinsamen Kreislauf ermöglicht.

7. Kreislauf nach Anspruch 6, **dadurch kennzeichnet, dass** das Vierwege-Bypass-Ventil (13) einen Bypass (14) aufweist.

8. Kreislauf nach Anspruch 6 oder 7, **dadurch gekennzeichnet, dass** das Vierwege-Bypass-Ventil (13) integriert in der Turbinen/Pumpen-Kombination (1) ausgebildet ist.

9. Kreislauf nach einem der vorhergehenden Ansprüche, **dadurch gekennzeichnet, dass** die beiden Kreisläufe (HK und NK) über ein Rückschlagventil (RV) miteinander verbunden sind.

10. Verfahren zur Kühlung von Ladeluft mit einem Kreislauf nach einem der vorhergehenden Ansprüche, der durch eine Pumpe (5) umgewälzt wird, **dadurch gekennzeichnet, dass** die Pumpe (5) von einer Turbine (2) direkt oder indirekt angetrieben wird, wobei die Pumpe (5) und die Turbine (2) eine Turbinen/Pumpen-Kombination (1) bilden.

11. Verfahren nach Anspruch 10, **dadurch gekennzeichnet, dass** das die Turbine (2) von dem Haupt-Kühlmittel-Kreislauf angetrieben wird.

12. Verfahren nach Anspruch 10 oder 11, **dadurch gekennzeichnet, dass** die Regelung der Turbinen/Pumpen-Kombination (1) durch ein Regelventil (10), das im Kreislauf der Turbine (2) angeordnet ist, erfolgt.

13. Verfahren nach Anspruch 12, **dadurch gekennzeichnet, dass** das Regelventil (10) in Abhängigkeit von der Kühlmitteltemperatur (TK) und/oder dem Ladeluftdruck (p_{LL}) und/oder über ein Signal aus einem Steuergerät, das die Motorlast ermittelt und daraus den Kühlmittelbedarf im Niedertemperatur-Kreislauf bestimmt, gesteuert wird.

## Claims

1. Circuit for cooling charge air (LL) in a motor vehicle with a turbocharger, with a low-temperature circuit having a low-temperature cooler (NK), comprising a turbine/pump combination (1) in which a pump (5) is coupled rotationally fixed to a turbine (2), whereby the turbine (2) can be driven by a coolant of a main coolant circuit (HK) and the pump (5) produces circulation in the low-temperature circuit, such that the main coolant circuit (HK), in which the driving turbine (2), and the low-temperature circuit, in which the pump (5) driven by the turbine (2) are arranged, can be connected to one another, **characterised in that** the main coolant circuit (HK) comprises a main cooler (HKK).

2. Circuit according to Claim 1, **characterised in that** the turbine (2) is integrated in the main coolant circuit (THK), which is designed to be separate at least part of the time.

3. Circuit according to either of the preceding claims, **characterised in that** the pump (5) and the turbine (2) have a common shaft (8).

4. Circuit according to any of the preceding claims, **characterised in that** the pump rotor (7) and/or the turbine rotor (4) and/or the pump housing (6) and/or the turbine housing (3) is a plastic injection moulding.

5. Circuit according to any of the preceding claims, **characterised in that** a regulating valve (10) for controlling the coolant quantity flowing through the turbine (2) is arranged in the circuit of the turbine (2).

6. Circuit according to Claim 1, **characterised in that** a four-way bypass valve (13) or a mixing valve (12) is provided, which allows a change between two separate circuits and a common circuit.

7. Circuit according to Claim 6, **characterised in that** the four-way bypass valve (13) has a bypass (14).

8. Circuit according to Claims 6 or 7, **characterised in that** the four-way bypass valve (13) is designed to be integrated in the turbine/pump combination (1).

9. Circuit according to any of the preceding claims, **characterised in that** the two circuits (HK and NK) are connected to one another via a non-return valve (RV).

10. Method for cooling charge air by means of a circuit according to any of the preceding claims, in which circulation is produced by a pump (5), **characterised in that** the pump (5) is driven directly or indirectly by a turbine (2), the pump (5) and the turbine (2) forming a turbine/pump combination (1).

11. Method according to Claim 10, **characterised in that** the turbine (2) is driven by the main coolant circuit.

12. Method according to Claims 10 or 11, **characterised in that** the turbine/pump combination (1) is controlled by a regulating valve (10) located in the circuit of the turbine (2).

13. Method according to Claim 12, **characterised in that** the regulating valve (10) is controlled as a function of the coolant temperature (TK) and/or of the charge-air pressure (p_{LL}) and/or via a signal from a control unit which determines the engine load and from this determines the coolant requirement in the low-temperature circuit.

## Revendications

1. Circuit servant au refroidissement de l'air de suralimentation (LL) concernant un véhicule automobile, comprenant un turbocompresseur, un circuit basse température comportant un refroidisseur basse température (NK), présentant un ensemble combiné turbine / pompe (1) dans lequel une pompe (5) est couplée, solidaire en rotation, à une turbine (2), où la turbine (2) peut être entraînée par un liquide de refroidissement d'un circuit principal de liquide de refroidissement (HK), et la pompe (5) active le circuit basse température, où le circuit principal de liquide de refroidissement (HK) dans lequel est disposée la turbine motrice (2), et le circuit basse température dans lequel est disposée la pompe entraînée par la turbine (2), peuvent être reliés entre eux, **caractérisé en ce que** le circuit principal de liquide de refroidissement (HK) présente un refroidisseur principal (HKK).

2. Circuit selon la revendication 1, **caractérisé en ce que** la turbine (2) est intégrée au circuit principal de liquide de refroidissement (HK) conçu de façon séparée, au moins temporairement.

3. Circuit selon l'une ou l'autre des revendications précédentes, **caractérisé en ce que** la pompe (5) et la turbine (2) présentent un arbre commun (8).

4. Circuit selon l'une quelconque des revendications précédentes, **caractérisé en ce que** la roue (7) de la pompe et / ou la roue (4) de la turbine et / ou le corps (6) de la pompe et / ou le corps (3) de la turbine est une pièce en matière plastique moulée par injection.

5. Circuit selon l'une quelconque des revendications précédentes, **caractérisé en ce qu'**une vanne de régulation (10) servant à la régulation de la quantité de liquide de refroidissement traversant la turbine (2) est disposée dans le circuit de la turbine (2).

6. Circuit selon la revendication 1, **caractérisé en ce qu'**il est prévu une vanne de dérivation (13) quatre voies ou une vanne mélangeuse (12) qui permet un passage entre deux circuits séparés, et un circuit commun.

7. Circuit selon la revendication 6, **caractérisé en ce que** la vanne de dérivation (13) quatre voies présente une dérivation (14).

8. Circuit selon la revendication 6 ou 7, **caractérisé en ce que** la vanne de dérivation (13) quatre voies est conçue en étant intégrée à l'ensemble combiné turbine / pompe (1).

9. Circuit selon l'une quelconque des revendications précédentes, **caractérisé en ce que** les deux circuits (HK et NK) sont reliés entre eux par un clapet de non-retour (RV).

10. Procédé servant au refroidissement de l'air de suralimentation comprenant un circuit, conformément à l'une quelconque des revendications précédentes, qui est activé par une pompe (5),
**caractérisé en ce que** la pompe (5) est entraîné directement ou indirectement par une turbine (2), où la pompe (5) et la turbine (2) forment un ensemble combiné turbine / pompe (1).

11. Procédé selon la revendication 10, **caractérisé en ce que** la turbine (2) est entraînée par le circuit principal de liquide de refroidissement.

12. Procédé selon la revendication 10 ou 11, **caractérisé en ce que** la régulation de l'ensemble combiné turbine / pompe (1) est réalisée par une vanne de régulation (10) qui est disposée dans le circuit de la turbine (2).

13. Procédé selon la revendication 12, **caractérisé en ce que** la vanne de régulation (10) est commandée en fonction de la température du liquide de refroidissement (TK) et / ou de la pression de l'air de suralimentation (p_{LL}) et / ou par un signal provenant du calculateur électronique qui calcule la charge du moteur et, d'après cette charge du moteur, détermine les besoins en liquide de refroidissement dans le circuit basse température.
